# EUROPEAN PATENT SPECIFICATION

(11) **EP 3 569 523 B1**
(45) Date of publication and mention of the grant of the patent: **04.12.2024**
(21) Application number: 17891876.9
(22) Date of filing: 16.01.2017
(51) Int. Cl.: B65G 1/04, B25J 5/00, B66F 9/07

(54) **ROBOT FOR CARRYING CONTAINER**
ROBOTER ZUM TRAGEN VON BEHÄLTERN
ROBOT PORTE-CONTENANTS

(43) Date of publication of application: 20.11.2019
(73) Proprietor: Zhejiang Guozi Robot Technology Co., Ltd., Hangzhou, Zhejiang 310053 (CN)
(72) Inventor: WU, Weifeng, Hangzhou City Zhejiang 310053 (CN); TAO, Yikun, Hangzhou City Zhejiang 310053 (CN); ZHENG, Hongbo, Hangzhou City Zhejiang 310053 (CN); ZHU, Lingfen, Hangzhou City Zhejiang 310053 (CN)
(74) Representative: LKGLOBAL Lorenz & Kopf Patentanwalt Attorney at Law PartG mbB
(86) International application number: PCT/CN2017/071280
(87) International publication number: WO 2018/129738

(56) References cited:
- WO-A1-2016/151504
- CN-A- 102 658 542
- CN-A- 102 658 542
- CN-A- 105 730 956
- CN-A- 106 005 862
- CN-U- 205 555 211
- GB-A- 2 336 838
- JP-A- H0 958 814
- US-A1- 2008 166 217
- US-B2- 9 540 171

## Description

### FIELD

The present application relates to the field of logistics and warehousing, and in particular to a robot for carrying a container.

### BACKGROUND

A carrying robot is a kind of equipment used in the field of automatic material carrying, which has many advantages such as high degree of automation, flexible application, safety and reliability, high efficiency and convenient maintenance. Therefore, the carrying robot is widely used in logistics and transportation occasions such as automotive manufacturing industry, food industry, tobacco industry, construction machinery industry, and the carrying robot has also made achievements in various public service places such as airports, hospitals and office buildings. These advantages also make the carrying robot become the key equipment in a modern logistics system and become one of the important members of the "machine substituting labor" program.

Because KIVA Company has put forward a concept of "shelf to person" and achieved great success, and its structure and method are described in detail in an American patent NO. US7850413B2. Many unmanned carrying robots with the concept of "shelf to person" arise in China, and good results have been achieved. However, in order to take a piece of goods, the KIVA robot needs to carry a whole shelf to a picking area, resulting in a great waste of resources.

Therefore, in order to overcome the disadvantage that the KIVA robot can only take one piece of goods at a time, those skilled in the art are committed to developing a robot for carrying a container which can carry a variety of goods at a time and improve the carrying efficiency of the carrying robot.
WO2016151504A1 discloses a robot drive unit (RDU), including an arm positioner that is mounted on a chassis of the RDU and that adjusts position of an arm unit in a vertical plane. The arm unit includes at least one arm to hold a product and an arm holder to hold the at least one arm. The arm positioner enables the arm unit to be moved along arm supporting structure. The arm unit includes an arm that further includes a base arm and an extendable arm, which is housed in the base arm. The extendable arm can be extended and retracted, which enables retrieving and storing the products. When extended, the extendable arm extends beyond the chassis of the RDU. The extendable arm can include holders.

### SUMMARY

In view of the above disadvantages of the conventional technology, the technical issue to be addressed by the present application is how to improve the carrying efficiency of a carrying robot. Since it is a container to be carried and the volume and weight of the container are much smaller than that of a shelf, multiple containers can be carried at a time. A single container stores at least one kind of goods, so a variety of goods can be carried at a time.

In order to achieve the above object, a robot for carrying a container is provided according to the present application, which includes a drive unit, a container storage unit and a container transport unit, where the drive unit carries the container storage unit and the container transport unit to jointly move. The container storage unit includes one or more container storage spaces, and the container transport unit is arranged at one side of the container storage unit and is configured to transport the container between the container storage space and the shelf. The container storage unit includes support rails, pallets and reinforcing ribs, and the support rails, the pallets and the reinforcing ribs are connected with each other to form one or more container storage spaces. The container transport unit includes a lifting device, a rotating device and a telescopic fork tooth, one end of the lifting device is connected with the support rails and is slidable up and down along a vertical direction of the support rails, and another end of the lifting device is connected with the telescopic fork tooth through the rotating device, the telescopic fork tooth is configured to extend and retract along a telescopic direction, the rotating device drives the telescopic fork tooth to rotate, such that a telescopic direction of the telescopic fork tooth rotates.

Further, the drive unit includes a chassis frame and drive wheels configured to drive the robot to move or stop.

Further, the motion includes advance, reverse, turn and in-situ rotation.

Further, two or more drive wheels are provided.

Further, the pallets are configured to separate the storage spaces.

According to the invention, the container transport unit includes a lifting device, a rotating device and a telescopic device, where one end of the lifting device is connected with the support rails and can slide up and down along a vertical direction of the support rails, and the other end of the lifting device is connected with the telescopic device through the rotating device.

Further, the robot for carrying a container further includes the container, the container storage spaces and the container have machine-readable codes, and the container transport unit further includes a positioning sensor and a pose sensor.

Further, the machine-readable code is a barcode or a two-dimensional barcode or a character string or an RFID.

Further, the positioning sensor is configured to detect a position of the container, and the positioning sensor is a vision sensor or a radio frequency sensor.

Further, the pose sensor is configured to detect a positional posture of the container on the container transport unit, and the pose sensor is a vision sensor or a radio frequency sensor.

Further, the pallet is a plate with an integral surface or the pallet is hollowed or partitioned.

The process of the robot for carrying a container according to the present application carrying the container to the container storage unit is as follows, the carrying robot moves the container transport unit to a specified position through the lifting device, and rotates the telescopic fork tooth to a specified angle through the rotating device, then extends the telescopic fork tooth to a position below the container to be transported, then lifts the container through the lifting device, then retracts the container through the telescopic fork tooth, then rotates the telescopic fork tooth and the container to another specified angle through the rotating device, then moves the container to a position above the pallet through the telescopic fork tooth, then lowers the container through the lifting device to place the container on the pallet, and finally retracts the telescopic fork tooth. Therefore, the robot for carrying a container according to present application can transport a variety of goods at a time, and has high working efficiency and low energy consumption.

The concept, specific structure and technical effects of the present application are further described in conjunction with the drawings below to fully understand the objects, features and effects of the present application.

### BRIEF DESCRIPTION OF THE DRAWINGS

Figure 1 is a perspective view of a carrying robot according to a preferred embodiment of the present application.
Figure 2 is a perspective view of a container transport unit according to the preferred embodiment of the present application.
Figure 3 is a perspective view of a carrying robot according to another preferred embodiment of the present application.

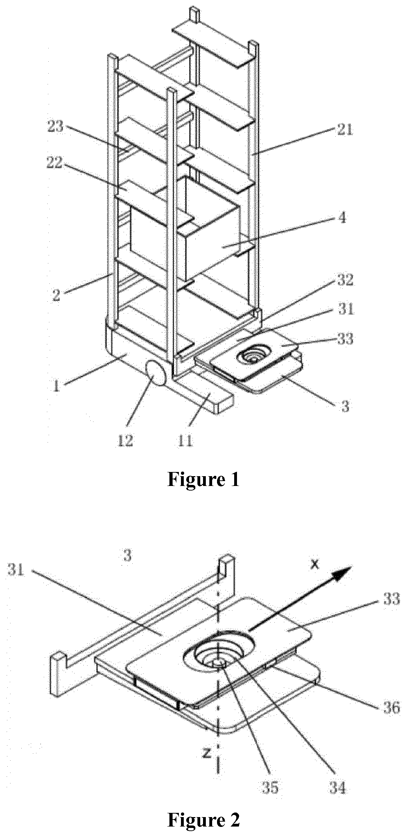

Reference numerals in Figures 1 to 3:

| | | | |
|---|---|---|---|
| 1 | drive unit; | 11 | chassis frame; |
| 12 | drive wheel; | 2 | container storage unit; |
| 21 | support rail; | 22 | pallet; |
| 3 | container transport unit; | 31 | mounting frame; |
| 32 | lifting device; | 33 | telescopic fork tooth; |
| 34 | rotating device; | 35 | pose sensor; |
| 36 | positioning sensor; | 4 | container. |

### DETAILED DESCRIPTION OF EMBODIMENTS

Two preferred embodiments of the present application are described below with reference to the drawings of the specification to make the technical contents of the embodiments clearer and easier to understand. The present application may be embodied by many different forms of embodiments, and the scope of protection of the present application is not limited to the embodiments disclosed herein.

In the drawings, components with the same structure are represented by the same reference numerals, and components with similar structures or functions are represented by similar reference numerals. The dimensions and thickness of each component shown in the drawings are not shown to scale, and the present application does not limit the dimensions and thickness of each component. In order to make the illustrations clearer, the thickness of the components is appropriately exaggerated in some places of the drawings.

When some components are described as 'on another component', the components may be placed directly on another component, or there may be an intermediate component, the components are placed on the intermediate component, and the intermediate component is placed on another component. When some components are described as 'mounted to' or 'connected to' another component, the components may be directly 'mounted to' or 'connected to' the other component, or there may be an intermediate component, and the components are 'mounted to' or 'connected to' another component through the intermediate component.

### First Embodiment:

As shown in Figures 1 and 2, a robot for carrying a container includes a drive unit 1, a container storage unit 2 and a container transport unit 3.
(1) The drive unit 1 is configured to drive the container storage unit 2 and the container transport unit 3, both of which are mounted on the drive unit to jointly move on the ground;
(2) the container storage unit 2 is arranged above the drive unit 1 and configured to store the container 4; and
(3) the container transport unit 3 is arranged at one side of the container storage unit 2 and configured to transport the container 4 into the container storage unit 2 or out of the container storage unit 2 to a specified position.

The drive unit 1 includes a chassis frame 11 and drive wheels 12, where two drive wheels 12 are provided and symmetrically mounted on two sides of the chassis frame 11. By the rotation of the drive wheels 12, the advance, reverse, turn and in-situ rotation of the robot can be realized.

The container storage unit 2 includes support rails 21, pallets 22 and reinforcing ribs 23. The support rails 21 are located above the drive unit 1. The support rails 21 are connected to each other by the pallets 22 and the reinforcing ribs 23, and the pallets 22 are configured to stack the containers.

The container storage unit 2 can store multiple containers.

Each of the pallets 22 is separated in the middle.

The container transport unit 3 includes a frame 31, a lifting device 32, a telescopic fork tooth 33 and a rotating device 34. One end of the lifting device 31 is connected with the support rails 21 and can slide up and down along a vertical direction of the support rails 21, and another end is connected with the telescopic fork tooth 33 through the rotating device 34.

The telescopic fork tooth 33 can rotate along the z-axis through the rotating device 34.

The telescopic fork tooth 33 extends or retracts along the x direction. If the rotating device 34 drives the telescopic fork tooth 33 to rotate, a telescopic direction of the telescopic fork tooth 33 also rotates.

The container transport unit 3 further includes a pose sensor 35 configured to identify a posture of the container above the telescopic fork tooth 33, and a positioning sensor 36 configured to detect a position of the container.

The pose sensor 35 may be a vision sensor or other sensor that can obtain pose information.

The positioning sensor 36 may be a vision sensor or other sensor that can obtain pose information.

The process of the robot for carrying a container carrying the container 4 to the container storage unit 2 is as follows, the robot moves the container transport unit 3 to a specified position through the lifting device 32, and rotates the telescopic fork tooth 33 to a specified angle through the rotating device 34, then extends the telescopic fork tooth 33 to a position below the container 4 to be transported, then lifts the container 4 through the lifting device 32, then retracts the container 4 through the telescopic fork tooth 33, then rotates the telescopic fork tooth 33 and the container 4 to another specified angle through the rotating device 34, then moves the container 4 to a position above the pallet 22 through the telescopic fork tooth 33, then lowers the container 4 through the lifting device 32 to place the container on the pallet 22, and finally retracts the telescopic fork tooth 33.

### Second Embodiment:

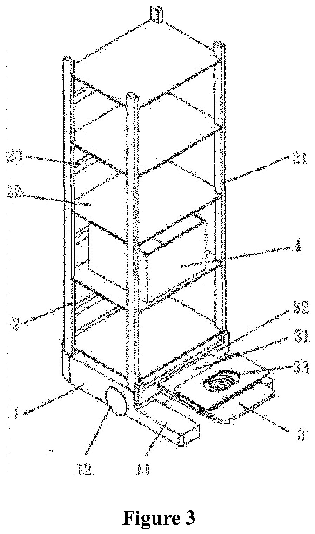

As shown in Figures 2 and 3, a robot for carrying a container includes a drive unit 1, a container storage unit 2 and a container transport unit 3.
(1) The drive unit 1 is configured to drive the container storage unit 2 and the container transport unit 3, both of which are mounted on the drive unit to jointly move on the ground;
(2) the container storage unit 2 is arranged above the drive unit 1 and configured to store the container 4; and
(3) the container transport unit 3 is arranged at one side of the container storage unit 2 and configured to transport the container 4 into the container storage unit 2 or out of the container storage unit 2 to a specified position.

The drive unit 1 includes a chassis frame 11 and drive wheels 12, where two drive wheels 12 are provided and symmetrically mounted on both sides of the chassis frame 11. By the rotation of the drive wheels 12, the advance, reverse, turn and in-situ rotation of the robot can be realized.

The container storage unit 2 includes support rails 21, pallets 22 and reinforcing ribs 23. The support rails 21 are located above the drive unit 1. The support rails 21 are connected to each other by the pallets 22 and the reinforcing ribs 23, and the pallets 22 are configured to stack the containers.

The container storage unit 2 can store multiple containers.

Each of the pallets 22 is a flat plate connected with the support rails 21 on both sides.

The container transport unit 3 includes a frame 31, a lifting device 32, a telescopic fork tooth 33 and a rotating device 34. One end of the lifting device 31 is connected with the support rails 21 and can slide up and down along a vertical direction of the support rails 21, and the other end is connected with the telescopic fork tooth 33 through the rotating device 34.

The telescopic fork tooth 33 can rotate along the z-axis through the rotating device 34.

The telescopic fork tooth 33 can extend or retract along the x direction. If the rotating device 34 drives the telescopic fork tooth 33 to rotate, a telescopic direction of the telescopic fork tooth 33 also rotates.

The container transport unit 3 further includes a pose sensor 35 configured to identify a posture of the container above the telescopic fork tooth 33, and a positioning sensor 36 configured to detect a position of the container.

The pose sensor 35 may be a vision sensor or other sensor that can obtain pose information, such as a radio frequency sensor.

The positioning sensor 36 may be a vision sensor or other sensor that can obtain pose information, such a radio frequency sensor.

The process of the robot for carrying a container carrying the container 4 to the container storage unit 2 is as follows, the robot moves the container transport unit 3 to a specified position through the lifting device 32, and rotates the telescopic fork tooth 33 to a specified angle through the rotating device 34, then extends the telescopic fork tooth 33 to a position below the container 4 to be transported, then lifts the container 4 through the lifting device 32, then retracts the container 4 through the telescopic fork tooth 33, then rotates the telescopic fork tooth 33 and the container 4 to another specified angle through the rotating device 34, then moves the container 4 to a position above the pallet 22 through the telescopic fork tooth 33, then lowers the container 4 through the lifting device 32 to place the container on the pallet 22, and finally retracts the telescopic fork tooth 33.

The preferred embodiments of the present application are described in detail above. It should be understood that various modifications and changes can be made in accordance with the concept of the present application by those skilled in the art without any creative efforts. The scope of protection is determined by the claims.

## Claims

1. A robot for carrying a container, comprising a drive unit (1), a container storage unit (2) and a container transport unit (3), wherein the drive unit (1) is configured to carry the container storage unit (2) and the container transport unit (3) to jointly move; and the container storage unit (2) comprises one or more container storage spaces; and
the container transport unit (3) is arranged at one side of the container storage unit (2) and is configured to transport the container between the container storage spaces and a shelf;
the container storage unit (2) comprises support rails (21), pallets (22) and reinforcing ribs, and the support rails (21), the pallets (22) and the reinforcing ribs are connected with each other to form one or more container storage spaces, and
the container transport unit (3) comprises a lifting device (31), a rotating device (34) and a telescopic fork tooth, one end of the lifting device (31) is connected with the support rails (21) and is slidable up and down along a vertical direction of the support rails (21), **characterized in that**
another end of the lifting device (31) is connected with the telescopic fork tooth through the rotating device (34), the telescopic fork tooth is configured to extend and retract along a telescopic direction, the rotating device (34) drives the telescopic fork tooth to rotate, such that the telescopic direction of the telescopic fork tooth rotates.

2. The robot for carrying a container according to claim 1, wherein the drive unit (1) comprises a chassis frame (11) and a drive wheel (12), and the drive wheel (12) is configured to drive the robot to move or stop.

3. The robot for carrying a container according to claim 2, wherein motions of the robot comprise advance, reverse, turn and in-situ rotation.

4. The robot for carrying a container according to claim 2, wherein two or more drive wheels (12) are provided.

5. The robot for carrying a container according to claim 1, wherein the pallets (22) are configured to separate the one or more container storage spaces.

6. The robot for carrying a container according to any one of claims 1 to 5, further comprising a container, wherein the one or more container storage spaces and the container are provided with machine-readable codes, and the container transport unit (3) further comprises a positioning sensor (36) and a pose sensor (35).

7. The robot for carrying a container according to claim 6, wherein each of the machine-readable codes is a barcode or a two-dimensional barcode or a character string or an RFID.

8. The robot for carrying a container according to claim 6, wherein the positioning sensor (36) is configured to detect a position of the container, and the positioning sensor (36) is a vision sensor or a radio frequency sensor.

9. The robot for carrying a container according to claim 6, wherein the pose sensor (35) is configured to detect a pose of the container on the container transport unit (3), and the pose sensor (35) is a vision sensor or a radio frequency sensor.

10. The robot for carrying a container according to claim 1, wherein each of the pallets (22) is a flat plate with an integral surface or each of the pallets (22) is hollowed or partitioned.

## Patentansprüche

1. Roboter zum Tragen eines Behälters, umfassend eine Antriebseinheit (1), eine Behälterlagereinheit (2) und eine Behältertransporteinheit (3), wobei die Antriebseinheit (1) so konfiguriert ist, dass sie die Behälterlagereinheit (2) und die Behältertransporteinheit (3) trägt, um sich gemeinsam zu bewegen; und die Behälterlagereinheit (2) einen oder mehrere Behälterlagerplätze umfasst; und
die Behältertransporteinheit (3) an einer Seite der Behälterlagereinheit (2) angeordnet und zum Transport des Behälters zwischen den Behälterlagerplätzen und einem Regal ausgebildet ist;
die Behälterlagereinheit (2) Tragschienen (21), Paletten (22) und Verstärkungsrippen umfasst und die Tragschienen (21), die Paletten (22) und die Verstärkungsrippen miteinander verbunden sind, um einen oder mehrere Behälterlagerplätze zu bilden, und
die Behältertransporteinheit (3) eine Hebevorrichtung (31), eine Drehvorrichtung (34) und einen Teleskopgabelzahn umfasst, wobei ein Ende der Hebevorrichtung (31) mit den Tragschienen (21) verbunden und entlang einer vertikalen Richtung der Tragschienen (21) auf und ab verschiebbar ist,
**dadurch gekennzeichnet, dass** ein anderes Ende der Hebevorrichtung (31) mit dem Teleskopgabelzahn durch die Drehvorrichtung (34) verbunden ist, der Teleskopgabelzahn so konfiguriert ist, dass er entlang einer Teleskoprichtung aus- und einfährt, die Drehvorrichtung (34) den Teleskopgabelzahn antreibt, um sich zu drehen, so dass sich die Teleskoprichtung des Teleskopgabelzahns dreht.

2. Roboter zum Tragen eines Behälters nach Anspruch 1, wobei die Antriebseinheit (1) einen Fahrgestellrahmen (11) und ein Antriebsrad (12) umfasst, und das Antriebsrad (12) so konfiguriert ist, dass es den Roboter zum Bewegen oder Anhalten antreibt.

3. Roboter zum Tragen eines Behälters nach Anspruch 2, wobei Bewegungen des Roboters Vorwärts-, Rückwärts-, Dreh- und In-Situ-Drehbewegungen umfassen.

4. Roboter zum Tragen eines Behälters nach Anspruch 2, wobei zwei oder mehr Antriebsräder (12) vorgesehen sind.

5. Roboter zum Tragen eines Behälters nach Anspruch 1, wobei die Paletten (22) so konfiguriert sind, dass sie den einen oder die mehreren Behälterlagerplätze voneinander trennen.

6. Roboter zum Tragen eines Behälters nach einem der Ansprüche 1 bis 5, ferner aufweisend einen Behälter, wobei der eine oder die mehreren Behälterlagerplätze und der Behälter mit maschinenlesbaren Codes versehen sind und die Behältertransporteinheit (3) ferner einen Positionierungssensor (36) und einen Lagesensor (35) aufweist.

7. Roboter zum Tragen eines Behälters nach Anspruch 6, wobei jeder der maschinenlesbaren Codes ein Strichcode oder ein zweidimensionaler Strichcode oder eine Zeichenkette oder ein RFID ist.

8. Roboter zum Tragen eines Behälters nach Anspruch 6, wobei der Positionierungssensor (36) so konfiguriert ist, dass er eine Position des Behälters erfasst, und der Positionierungssensor (36) ein Vision-Sensor oder ein Funkfrequenzsensor ist.

9. Roboter zum Tragen eines Behälters nach Anspruch 6, wobei der Lagesensor (35) so konfiguriert ist, dass er eine Lage des Behälters auf der Behältertransporteinheit (3) erfasst, und der Lagesensor (35) ein Vision-Sensor oder ein Radiofrequenzsensor ist.

10. Roboter zum Tragen eines Behälters nach Anspruch 1, wobei jede der Paletten (22) eine flache Platte mit integrierter Oberfläche ist oder jede der Paletten (22) ausgehöhlt oder unterteilt ist.

## Revendications

1. Un robot pour transporter un conteneur, comprenant une unité d'entraînement (1), une unité de stockage de conteneurs (2) et une unité de transport de conteneurs (3), dans lequel l'unité d'entraînement (1) est configurée pour transporter l'unité de stockage de conteneurs (2) et l'unité de transport de conteneurs (3) pour se déplacer conjointement ; et l'unité de stockage de conteneurs (2) comprend un ou plusieurs espaces de stockage de conteneurs ; et
l'unité de transport de conteneurs (3) est disposée sur un côté de l'unité de stockage de conteneurs (2) et est configurée pour transporter le conteneur entre les espaces de stockage de conteneurs et une étagère ;
l'unité de stockage de conteneurs (2) comprend des rails de support (21), des palettes (22) et des nervures de renforcement, et les rails de support (21), les palettes (22) et les nervures de renforcement sont reliés les uns aux autres pour former un ou plusieurs espaces de stockage de conteneurs, et
l'unité de transport de conteneurs (3) comprend un dispositif de levage (31), un dispositif rotatif (34) et une dent de fourche télescopique, une extrémité du dispositif de levage (31) est reliée aux rails de support (21) et peut coulisser de haut en bas le long d'une direction verticale des rails de support (21),
**caractérisé par le fait qu'**une autre extrémité du dispositif de levage (31) est reliée à la dent de fourche télescopique par l'intermédiaire du dispositif de rotation (34), la dent de fourche télescopique est configurée pour s'étendre et se rétracter le long d'une direction télescopique, le dispositif de rotation (34) entraîne la dent de fourche télescopique en rotation, de sorte que la direction télescopique de la dent de fourche télescopique tourne.

2. Le robot pour transporter un conteneur selon la revendication 1, dans lequel l'unité d'entraînement (1) comprend un cadre de châssis (11) et une roue motrice (12), et la roue motrice (12) est configurée pour entraîner le robot à se déplacer ou à s'arrêter.

3. Le robot pour transporter un conteneur selon la revendication 2, dans lequel les mouvements du robot comprennent l'avance, le recul, la rotation et la rotation in situ.

4. Le robot pour transporter un conteneur selon la revendication 2, dans lequel deux roues motrices (12) ou plus sont prévues.

5. Le robot pour transporter un conteneur selon la revendication 1, dans lequel les palettes (22) sont configurées pour séparer un ou plusieurs espaces de stockage de conteneurs.

6. Le robot pour transporter un conteneur selon l'une des revendications 1 à 5, comprenant en outre un conteneur, dans lequel le ou les espaces de stockage du conteneur et le conteneur sont dotés de codes lisibles par machine , et l'unité de transport de conteneurs (3) comprend en outre un capteur de positionnement (36) et un capteur de pose (35).

7. Le robot pour transporter un conteneur selon la revendication 6, dans lequel chacun des codes lisibles par machine est un code-barres ou un code-barres bidimensionnel ou une chaîne de caractères ou un RFID.

8. Le robot pour transporter un conteneur selon la revendication 6, dans lequel le capteur de positionnement (36) est configuré pour détecter une position du conteneur, et le capteur de positionnement (36) est un capteur de vision ou un capteur à radiofréquence.

9. Le robot pour transporter un conteneur selon la revendication 6, dans lequel le capteur de pose (35) est configuré pour détecter une pose du conteneur sur l'unité de transport de conteneurs (3), et le capteur de pose (35) est un capteur de vision ou un capteur à radiofréquence.

10. Le robot pour transporter un conteneur selon la revendication 1, dans lequel chacune des palettes (22) est une plaque plate avec une surface intégrale ou chacune des palettes (22) est creusée ou cloisonnée.
